# EUROPÄISCHE PATENTSCHRIFT

(11) **EP 0 925 708 B1**
(45) Veröffentlichungstag und Bekanntmachung des Hinweises auf die Patenterteilung: **14.03.2001**
(21) Anmeldenummer: 97944704.2
(22) Anmeldetag: 12.09.1997
(51) Int. Cl.: H04Q 11/04, H04L 12/46

(54) **VERFAHREN UND VORRICHTUNG ZUR VERGRÖSSERUNG DER REICHWEITE DES ÜBERTRAGUNGSWEGES ZWISCHEN FUNKTIONSEINHEITEN DES ISDN-TEILNEHMERANSCHLUSSES MIT EINER MINIMIERTEN BANDBREITE**
PROCESS AND DEVICE FOR INCREASING THE REACH OF TRANSMISSION PATHS BETWEEN FUNCTIONAL UNITS OF AN ISDN SUBSCRIBER CONNECTION WITH A MINIMIZED BAND WIDTH
PROCEDE ET DISPOSITIF POUR AUGMENTER LA PORTEE DE LA VOIE DE TRANSMISSION ENTRE DES UNITES FONCTIONNELLES DU POSTE D'ABONNE RNIS AVEC UNE BANDE PASSANTE MINIMISEE

(30) Priorität: 13.09.1996 DE 19637302; 22.07.1997 US 898277
(43) Veröffentlichungstag der Anmeldung: 30.06.1999
(73) Patentinhaber: DICA Technologies AG, 10245 Berlin (DE)
(72) Erfinder: WULST, Norbert, D-01877 Bischofswerda (DE); HELBIG, Klaus, D-12459 Berlin (DE)
(74) Vertreter: Uhlemann, Henry, Dipl. Chem.
(86) Internationale Anmeldenummer: DE9702042
(87) Internationale Veröffentlichungsnummer: WO9811755

(56) Entgegenhaltungen:
- EP-A- 0 173 106
- EP-A- 0 532 972
- DE-A- 19 506 906
- DE-C- 4 407 214
- US-A- 5 412 660
- GINGELL J: "BUILDING BLOCKS FOR ISDN" ELECTRONICS & WIRELESS WORLD, Bd. 95, Nr. 1646, 1.Dezember 1989, Seiten 1172-1174, XP000072723
- HUBER M N ET AL: "MODELLING OF A MULTI-QUEUE POLLING SYSTEM WITH ARBITRARY SERVER INTERRUPTS FOR THE IDLE-SLOT-CONCATENATION PACKET SWITCHING PRINCIPLE IN A HYBRID CS/PS NODE" PROCEEDINGS OF THE TWELFTH INTERNATIONAL TELETRAFFIC CONGRESS (ITC-12), Bd. 1, 1. - 8.Juni 1988, TORINO, Seiten 521-528, XP000279785
- MORITA S ET AL: ""ELASTIC BASKET SWITCHING" APPLICATION TO DISTRIBUTED PBX" ICC '87, Bd. 2 OF 3, 7. - 10.Juni 1987, SEATTLE, Seiten 789-793, XP002063261
- GERKE P R: "THE INTEGRATED SERVICES DIGITAL NETWORK ISDN) AS A BASIS FOR COMBINED TELECOMMUNICATION" FROM ELECTRONICS TO MICROELECTRONICS (EUROCON '80), 4TH CONFERENCE, 24. - 28.März 1980, STUTTGART, Seiten 233-236, XP002037606
- PATENT ABSTRACTS OF JAPAN vol. 096, no. 002, 29.Februar 1996 & JP 07 273802 A (MITSUBISHI ELECTRIC CORPORATION), 20.Oktober 1995,

## Beschreibung

Die Erfindung betrifft ein Verfahren und eine Vorrichtung zur Vergrößerung der Reichweite des Übertragungsweges zwischen Funktionseinheiten des ISDN-Teilnehmeranschlusses bezogen auf eine ISDN-Schnittstelle, wie sie beispielsweise nach CCITT 1.400 - ISDN User Network Interface und 1.430 - Basic User Network Interface standardisiert ist. Mit der Erfindung ist es möglich, die vielfältigen ISDN-Dienste über weite Entfernungen mit einer minimierten Bandbreite zu übertragen.

Das ISDN (Integrated Services Digital Network), das neben dem Fernsprechen auch die schnelle Übertragung von Daten, Texten und Bildern ermöglicht, gibt an seinen Schnittstellen die Möglichkeit des Anschlusses von NT- und TE-Geräten sowie weiterer Verteilernetze. Unabhängig einer netzseitigen Verknüpfung von ISDN-Endeinrichtungen (TE) oder Netzabschlüssen (NT) ist es von Vorteil, die Reichweite des Übertragungsweges zwischen Funktionseinheiten des ISDN-Teilnehmeranschlusses bezogen auf eine ISDN-Schnittstelle zu verlängern, um die in einem Netz anliegenden Informationen über eine längere Strecke weitergeben zu können. Dabei ist jedoch die erzielbare Reichweite mit herkömmlichen Mitteln aufgrund der elektrischen Eigenschaften der ISDN-Schnittstellen und -verbindungswege wesentlich eingeschränkt.

In US 5,412,660 A wird ein Satellitten ISDN-Kommunikationslink für einen fehlerkorrigierten transparenten Datenaustausch zwischen einem Netzwerk und einem Teilnehmer beschrieben. Für die Datenkommunikation wird ein Verbindungs-Zugriffsprotoll (LAPM-Frame) genutzt, das die Signalverzögerung und das Rauschen im Satellitenkanal überbrücken soll. Protokoll 1 (LAPD-Frame) soll dabei in dieses Verbindungs-Zugriffsprotokoll (Protokoll 2) eingekapselt werden.

Aus DE 44 07 214 C1 ist eine technische Lösung bekannt, die trotz bestehender Grenzen der physikalischen Bedingungen an einer Schnittstelle eines ISDN-Teilnehmeranschlusses eine Vergrößerung der Reichweite des Übertragungsweges zwischen Funktionseinheiten des ISDN-Teilnehmeranschlusses erlaubt. Dabei'werden sowohl netz- als auch terminalseitig die an den ISDN-Schnittstellen auflaufenden bzw. erforderlichen ISDN-spezifisch kodierten Daten in binär kodierte Daten gewandelt. Die binär kodierten Daten werden einer Blockbildung unterzogen und einem Übertragungsmittel zur Übermittlung zur netz- bzw. terminalseitigen Korrespondenz zugeleitet. Aufgrund der standardisierten Struktur z.B. eines ISDN-Basisanschlusses mit 2 x 64 kbit/s für die B-Kanäle bzw. 1 x 16 kbit/s für den D-Kanal und notwendiger Signalisierungs- und Steuerinformationen werden dabei nach DE 44 07 214 Cl über das Übertragungsmittel Informationen in einer Bandbreite von 160 kbit/s übertragen und damit erhebliche und teure Bandbreite für die Datenübermittlung z. B. über einen Satelittenkanal beansprucht.
Bei der Datenübermittlung insbesondere über Satellitenkanäle besteht jedoch erheblicher Bedarf an verkürzten Bandbreiten bzw. an genau definierten Bandbreiten in einer Größe von beispielsweise 64 oder 128 kbit/s. Eine Reihe von Satellitendienst-Anbietern betreiben Terminals mit 64 kbit/s-Kanälen.

Aufgabe der Erfindung ist es deshalb, ein Verfahren und eine Vorrichtung zu schaffen, die es gestatten, mit einer minimierten Bandbreite die Reichweite des Übertragungsweges zwischen Funktionseinheiten des ISDN-Teilnehmeranschlusses bezogen auf eine ISDN-Schnittstelle zu vergrößern. Dies bei Erhaltung aller ISDN-typischen Merkmale, wie:
- Aufrechterhaltung des Netztaktes
- Mehrfachzugriff auf den Schnittstellenbus
- Aktivierung und Deaktivierung der Schnittstelle.

Erfindungsgemäß wird die Aufgabe zur Vergrößerung der Reichweite des Übertragungsweges zwischen Funktionseinheiten des ISDN-Teilnehmeranschlusses mit einer minimierten Bandbreite und bezogen auf eine ISDN-Schnittstelle unter Verwendung eines Übertragungsmittels durch ein Verfahren und eine entsprechende Einrichtung gemäß Anspruch 9 gelöst,
wobei
sendeseitig die an der ISDN-Schnittstelle auflaufenden ISDN-spezifisch kodierten Daten mittels eines Kodewandlers in binär kodierte Daten getrennt nach B- und D-Kanalinformationen umgewandelt werden,
die auflaufenden Daten aufbereitet, verarbeitet und anschließend in einem aus dem ISDN-Netztakt abgeleiteten Takt dem Übertragungsmittel zugeführt und über dieses der Empfängerseite übermittelt werden
empfängerseitig mittels eines Taktrückgewinnungsmittels aus der zeitlichen Abfolge der übertragenen Datenbits, die zur Kommunikation von Sender und Empfänger notwendigen ISDN-spezifischen Takte zurückgewonnen werden,
die empfangenen Datenbits analysiert, bearbeitet und entsprechend dem zurückgewonnenen ISDN-Netztakt dem Kodewandler zugeführt und die binär kodierten Daten in ISDN-spezifisch kodierte Daten umgewandelt werden, und dabei
   A) die auflaufenden Daten der B-Kanäle nach B1- und B2-Kanaldaten separiert, gleichlange Abschnitte für B1- und B2-Kanaldaten in einer Speichereinrichtung bereitgestellt, auf Datengleichheit untersucht, gleiche Daten komprimiert und anschließend in einem aus dem ISDN-Netztakt abgeleiteten Schrittakt im Wechsel von B1- und B2-Kanaldaten dem Übertragungsmittel zugeführt und über dieses der Empfängerseite übermittelt werden,
   B) aus den auflaufenden Daten des D-Kanals Blöcke gebildet, die Übertragung von B-Kanaldaten unterbrochen wird und die D-Kanal-Blöcke anstelle der B-Kanaldaten bevorzugt dem Übertragungsmittel zur Übermittlung auf die Empfängerseite zugeführt werden, und
   C) die empfangenen Daten byteweise auf deren Merkmale analysiert, erkannte D-Kanalblöcke aufgelöst, dem Kodewandler direkt zugeführt werden, erkannte B-Kanalkomprimierungsdaten aufgelöst und mit erkannten B-Kanaldaten getrennt nach B1- und B2-Kanaldaten in einer Speichereinrichtung zwischengespeichert und entsprechend dem rückgewonnenen Takt dem Kodewandler zugeführt und die binär kodierten Daten in ISDN-spezifisch kodierte Daten umgewandelt werden.

Die Komprimierung bzw. Dekomprimierung der B-Kanaldaten nach Verfahrensschritt b) erfolgt vorzugsweise so, daß bei der Komprimierung gleiche Zeichen mit einem Wiederholungszähler und einer Kennung versehen und bei der Dekomprimierung gekennzeichnete Zeichenwiederholungen wieder aufgelöst werden.

Vorteilhaft erfolgt in den Zeiten, in denen ein B1- und/oder B2-Kanal nicht zur Übertragung genutzt wird, keine Zuführung von B-Kanaldaten zum Übertragungsmittel. Ist z. B. nur ein B-Kanal aktiv, werden nur die B-Kanaldaten des aktiven B-Kanals bearbeitet. Damit reduziert sich die benötigte Datenrate im Übertragungsmittel auf die Datenrate des aktiven B-Kanals.

Die natürlich auftretenden Schwankungen in der geforderten Größe der Datenrate für die Übertragung der B-, D-Kanalinformationen und der Komprimierungsinformationen werden bei der Datenübermittlung dadurch ausgeglichen, daß terminal- bzw. netzseitig die übermittelten binär kodierten Daten mittels einer nach dem FIFO-Prinzip organisierten Speichereinrichtung geeigneter Tiefe zwischengepuffert werden. Mit dem erfindungsgemäßen Verfahren kann damit vorteilhaft die für die Datenübertragung erforderliche Bandbreite bis auf die Nettodatenrate der zu übertragenden B-Kanäle reduziert werden.

Für die Komprimierung werden die im B1- und B2-Kanal-Datenstrom auftretenden Zeichenwiederholungen genutzt. Werden derartige Zeichenwiederholungen erkannt, wird für den jeweiligen Kanal ein entsprechend gekennzeichneter Komprimierungsblock gebildet, in dem angegeben wird, wieviel identische Daten im Ausgangsstrom gefunden wurden.
Ein Komprimierungsblock wird auch dann gebildet, wenn der Datenstrom dadurch nicht reduziert wird. Mit diesem Block wird die Synchronisation auf Bytegrenze für den B-Kanal-Datenstrom gewährleistet.
Vorteilhaft werden nach Verfahrensschritt b) B-Kanal-Abschnitte mit einer festen Länge gebildet und übertragen, wobei die Mindestlänge der D-Kanalblöcke und B-Kanal-Komprimierungsblöcke 1/4 der B-Kanal-Abschnitte ist und die D-Kanalblöcke ein Vielfaches der Mindestlänge aufweisen können.

Werden D-Kanalblöcke und B-Kanal-Komprimierungsblöcke gebildet, wird die Übertragung der B-Kanal-Abschnitte unterbrochen und anstelle der B-Kanal-Abschnitte diese Blöcke dem Übertragungsmittel zur Übermittlung auf die Empfängerseite zugeführt, wobei die Übertragung der D-Kanalblöcke bevorzugt erfolgt. Vorteilhaft wird die Übertragung der B-Kanalabschnitte an einer durch 4-teilbaren Stelle unterbrochen.

Die gebildeten B-Kanalabschnitte werden der Empfängerseite mit einem aus dem ISDN-Netztakt abgeleiteten Takt mittels bekannter Übertragungseinrichtungen über Satelliten oder andere Übertragungskanäle übermittelt. Dieser Bittakt wird terminalseitig für die ISDN-Schnittstelle aus dem Bitübertragungstakt mittels einer PLL-Schaltung (Phase Locked Loop) zurückgewonnen.

Empfängerseitig werden die empfangenen Datenbits analysiert, erkannte D-Kanalblöcke aufgelöst und die D-Kanal-Daten dem Kodewandler direkt zugeführt. Bei den erkannten B-Kanaldaten werden die B-Kanalkomprimierungsblöcke aufgelöst, entsprechend nach B1- und B2-Kanaldaten in der Speichereinrichtung zwischengespeichert und entsprechend dem rückgewonnenen Takt dem Kodewandler zugeführt und die binär kodierten Daten in ISDN-spezifisch kodierte Daten umgewandelt.

Sowohl die terminal- und netzseitige Wandlung der ISDN-spezifisch kodierten Daten in binär kodierte Daten erfolgt nach bekannten Prinzipien mittels eines Kodewandlers, vorzugsweise eines ISDN-Subscriber Access Controller.

Werden zur Übertragung vom Übertragungsmittel mehrere Kanäle genutzt, kann netz- und terminalseitig eine Aufteilung und Zuordnung entsprechend der zu übertragenden B-Kanäle erfolgen.

Vorteilhaft kann das erfindungsgemäße Verfahren auch so geführt werden, daß in den Zeiten in denen die ISDN-Schnittstelle nicht aktiv ist, die Übertragung digitaler, serieller Daten ohne Kodewandlung über das Übertragungsmittel erfolgt. Dies ist insbesondere dann möglich, wenn vom Übertragungsmittel mehrere Kanäle bereitgestellt werden. Dabei werden die Anschlüsse mindestens zu einem Übertragungskanal als Schnittstelle für den Austausch digitaler, serieller Daten und die anderen Übertragungskanäle für die Übertragung dieser Daten genutzt.

Erfindungsgemäß erfolgt die Realisierung des Verfahrens zur Vergrößerung der Reichweite des Übertragungsweges zwischen Funktionseinheiten eines ISDN-Teilnehmeranschlusses durch eine Vorrichtung, die sowohl terminal- als auch netzseitig aus einer Einrichtung zur Protokollwandlung und einem Übertragungskanal besteht.

Der Übertragungskanal besteht aus an sich bekannten Übertragungseinrichtungen und dem zur Übertragung genutzten Medium, z.B. einem Satellitenkanal mit den entsprechenden Sende- und Empfangseinrichtungen sowie den dafür erforderlichen Modems. Dabei kann der Übertragungskanal vorteilhaft aus mehreren Einzelkanälen bestehen. Besteht der Übertragungskanal aus mehreren Einzelkanälen, können die Anschlüsse mindestens zu einem Übertragungskanal vorteilhaft als Schnittstelle für den Austausch digitaler, serieller Daten genutzt werden. Damit wird die Übertragung digitaler, serieller Daten über die weiteren Übertragungskanäle in den Zeiten möglich, in denen die ISDN-Schnittstelle nicht aktiv ist.

Die Einrichtungen zur Protokollwandlung kommunizieren über den Übertragungskanal miteinander. Die Einrichtungen zur Protokollwandlung sind vorzugsweise gleich aufgebaut und können sowohl im Mastermode als auch im Slavemode fungieren, wobei jeweils die netzseitig angeschlossene Einrichtung zur Protokollwandlung im Mastermode und die terminalseitige Einrichtung zur Protokollwandlung im Slavemode arbeitet.

Die Einrichtungen zur Protokollwandlung bestehen im wesentlichen aus
einem ISDN-Schnittstellenmodul (1),
einem Mikrorechner (6),
einem oder mehreren Schnittstellenmodulen (2) für den Übertragungskanal X,
einem Modul zur Taktgenerierung (3),
einem Modeschalter (5),
einer Stromversorgung (4),
sowie entsprechenden elektrischen Verbindungen und einem Bus für den Adress- und Datenaustausch.

Der Mikrorechner (6) ist über einen Bus mit dem ISDN-Schnittstellenmodul (1) und einem oder mehreren Schnittstellenmodulen (2) für den Anschluß an den Übertragungskanal X verbunden.

Der Modul zur Taktgenerierung (3) ist mit dem Schnittstellenmodul (1) und mit den Schnittstellenmodulen (2) für den Anschluß an den Übertragungskanal (X) sowie mit dem Mikrorechner (6) verbunden und geeignet, aus der zeitlichen Abfolge der übertragenen Datenbits die zur Kommunikation von Sender und Empfänger notwendigen ISDN-spezifischen Takte zurückzugewinnen

Der Schalter (5) für die Modeeinstellung (Master/Slave) wirkt ein auf die Stromversorgung (4), auf den Schnittstellenmodul (1) und auf den Modul (3) zur Taktgenerierung. Der Modeschalter (5) weist eine zusätzliche Schaltfunktion für den Betrieb zur Protokollwandlung über einen oder meherere Schnittstellenmodule (2) und die Zuweisung entsprechender Sendetakte für einen gemeinsamen Betrieb auf.

Die Stromversorgung (4) versorgt die Schaltung mit Spannung und erzeugt, wenn der Protokollwandler im Slavemode arbeitet, die Versorgungsspannung für netzunabhängige Endgeräte.

Der ISDN-Schnittstellenmodul (1) setzt elektrisch die ISDN-Schnittstelle in eine binär kodierte Form um und umgekehrt. Die binären Daten sowie notwendige Steuerinformationen werden über den Bus zwischen Schnittstellenmodul (1), dem Mikrorechner (6) und den Schnittstellenmodulen (2) ausgetauscht. Der ISDN-Schnittstellenmodul (1) ist aus einem ISDN-Schnittstellen-Interface und einem Schaltkreis zur Wandlung der ISDN-spezifisch kodierten Daten in binär kodierte Daten, beispielsweise einem ISDN-Subscriber Access Controller (ISAC-Schaltkreis) aufgebaut. Die Schnittstellenmodule (2) für die Übertragung auf dem X-Kanal bestehen jeweils aus einem Schnittstelleninterface und einem seriellen Input-Output-Baustein SIO.

Der Mikrorechner (6) besteht aus einem Mikroprozessor, einem ROM zur Speicherung des Programmkodes, einem RAM als Arbeitsspeicher und einem BUS . Über den verlängerten BUS ist der Mikrorechner (6) mit dem ISAC-Schaltkreis im Schnittstellenmodul (1) sowie mit den seriellen Input-Output-Bausteinen SIO in den Schnittstellenmodulen (2) verbunden.
Der Prozessor im Mikrorechner (6) steuert die Funktion der Bauelemente Taktmodul (3), ISAC-Schaltkreis in den Schnittstellenmodulen (1) und SIO in den Schnittstellenmodulen (2) in bekannter Weise durch Einstellung der dafür vorgesehenen Register in diesen Bauelementen.
Der Mikrorechner (6) ist geeignet, die auflaufenden Daten der B-Kanäle nach B1- und B2- Kanaldaten zu separieren, gleichlange Abschnitte für B1- und B2-Kanaldaten in seinem Speicher bereitzustellen, anschließend zu komprimieren und in Verbindung mit dem Taktmodul (3) mit den Schnittstellenmodulen (2) auszutauschen sowie von den Schnittstellenmodulen (2) empfangene Daten zu übernehmen und an den Schnittstellenmodul (1) zu übergeben.

Netzseitig arbeitet die Einrichtung zur Protokollwandlung im Master -Mode wie folgt:

Im Schnittstellenmodul (1) erfolgt im ISDN-Interface die wechselseitige Umwandlung der Signalpegel von der ISDN-Schnittstelle auf die vom ISAC-Baustein benötigten Signalpegel.

Mit dem Modeschalter (5) wird der ISAC-Baustein im Schnittstellenmodul (1) in den TE-Mode (Terminal-Mode) geschaltet. In diesem Mode erzeugt der ISAC-Schaltkreis einen Takt 512 kHz am Ausgang DCL. Wenn die ISDN-Schnittstelle aktiv ist, so wird der Takt 512 kHz synchron aus dem Bittakt der ISDN-Schnittstelle abgeleitet.

Der Takt 512 kHz vom ISAC-Schaltkreis der ISDN-Schnittstelle wird im vom Prozessor im Mikrorechner (6) gesteuerten Modul zur Takterzeugung (3) benutzt, um entsprechend einer zusätzlichen Schalterstellung im Modeschalter (5) für die jeweiligen Schnittstellenmodule (2) den Übertragungstakt zu erzeugen.

Der ISAC-Schaltkreis im Schnittstellenmodul (1) wandelt die ternär kodierten B- und D-Kanal- Signale von der ISDN-Schnittstelle in binär kodierte Signale um und speichert diese byteweise in seinen Registern ab. Umgekehrt wandelt der Baustein die vom Prozessor im Mikrorechner (6) eingegebenen binär kodierten B- und D-Kanal-Bytes in ternäre Signale um und sendet diese Daten an das Interface des Schnittstellenmoduls (1) zur Übertragung auf der ISDN-Schnittstelle.

Der ISAC-Schaltkreis signalisiert durch ein Register, daß er bereit ist zur Übernahme je eines neuen B1- und B2-Kanal-Bytes und gleichzeitig je ein vollständiges B1 und B2-Kanal-Byte zur Übernahme durch den Prozessor im Mikrorechner (6) bereit steht. Der Prozessor im Mikrorechner (6) fragt das Signalisierungs-Register des ISAC-Schaltkreises zyklisch ab und separiert die B-Kanal-Bytes in B1 und B2-Kanal-Abschnitte in seinem Arbeitsspeicher.

Der ISAC-Schaltkreis signalisiert durch ein weiteres Register, wenn D-Kanal-Daten von der ISDN-Schnittstelle empfangen wurden. Der Prozessor im Mikrorechner (6) fragt dieses Signalisierungsbyte ebenfalls zyklisch ab und bildet aus den auflaufenden D-Kanaldaten D-Kanalblöcke.
Hat der Prozessor im Mikrorechner (6) einen D-Kanalblock von der Gegenstelle empfangen, wird dieser aufgelöst und an den ISAC-Schaltkreis zur Weiterleitung an die ISDN-Schnittstelle gegeben.

Aus den vom ISAC-Schaltkreis übernommenen B-Kanaldaten bildet der Prozessor im Mikrorechner (6) Abschnitte und speichert diese in seinem RAM zwischen.
Der Mikrorechner wählt entsprechend der logischen Adresse eine SIO aus und fragt zyklisch das Register dieser SIO ab. Die SIO zeigt in ihrem Register an, wann der nächste Datenteil übergeben werden soll, damit die Übertragung nicht abbricht. Der Prozessor im Mikrorechner (6) führt der adressierten SIO im Schnittstellenmodul (2) entsprechend weitere Datenteile zu.

Der Prozessor übergibt der SIO im jeweiligen Schnittstellenmodul (2) in fortlaufender Reihenfolge Datenteile der ISDN-Schnittstelle. Die ISDN-Schnittstelle arbeitet synchron auf der Basis des ISDN-Netztaktes, so daß auch die Datenteile entsprechend des im Modeschalter (5) für den jeweiligen Schnittstellenmodul (2) eingestellten Sendetakt synchron übertragen werden.

Bevor der Mikrorechner (6) B-Kanal-Abschnitte an die adressierte SIO übergibt, werden die zwischengespeicherten B-Kanaldaten analysiert. Aus komprimierungsfähigen Daten bildet er Komprimierungsblöcke und übermittelt diese anstelle der B-Kanal-Abschnitte. Die relative Adresse im B-Kanal-Abschnitt wird im Komprimierungsblock mitgeliefert.

Aus den vorhandenen D-Kanaldaten bildet der Mikrorechner (6) D-Kanalblöcke und übergibt sie bevorzugt der adressierten SIO anstelle der B-Kanal-Abschnitte, wobei die relative Adresse im B-Kanal-Abschnitt mit übertragen wird.

In umgekehrter Richtung empfängt die adressierte SIO im Schnittstellenmodul (2) bitserielle Daten über das Interface im Schnittstellenmodul (2). Wenn in der SIO der erste Datenteil empfangen wird, werden entsprechende Signalisierungsbits in einem Register der SIO gesetzt. Der Prozessor des Mikrorechners (6) fragt dieses Register zyklisch ab und analysiert die empfangenen Daten. B-Kanaldaten werden getrennt nach B1- und B2-Kanaldaten im RAM des Mikrorechners (6) zwischengespeichert. Erkannte D-Kanalblöcke werden aufgelöst und dem D-Kanal-Register des ISAC-Schaltkreises im Schnittstellenmodul (1) übergeben. Erkannte B-Kanalkomprimierungsblöcke werden aufgelöst und im RAM des Mikrorechners (6) zwischengespeichert und an den ISAC-Schaltkreis im Schnittstellenmodul (1) weitergeleitet.

Terminalseitig arbeitet die Einrichtung zur Protokollwandlung im Slave -Mode wie folgt:

Im Schnittstellenmodul (1) erfolgt im Schnittstellen-Interface die wechselseitige Umwandlung der Signalpegel von der ISDN-Schnittstelle auf die vom Baustein ISAC-Schaltkreis benötigten Signalpegel.

Durch die Mode-Einstellung (5) wird der ISAC-Schaltkreis im Schnittstellenmodul (1) in den NT-Mode (Network Terminal-Mode) geschaltet. In diesem Mode benötigt der ISAC-Schaltkreis synchrone Takte an den Eingängen DCL von 512 kHz, FSC1 und FSC2 von 8 kHz. Aus diesen leitet der ISAC-Schaltkreis die Rahmensynchron - und Bitsynchrontakte für die ISDN-Schnittstelle ab.

Im Modul zur Takterzeugung (3) wird aus dem Bittakt eines ausgewählten Schnittstellenmoduls (2) der Takt zurückgewonnen, aus dem im Modul zur Takterzeugung (3) mittels nach bekannten Prinzipien arbeitender PLL ein Takt 512 kHz und daraus durch Teilung ein Takt von 8 kHz erzeugt wird. Diese Takte werden an die entsprechenden Eingänge des ISAC-Schaltkreises im Schnittstellenmodul (1) geliefert.

Mikrorechner (6), ISAC-Schaltkreis im Schnittstellenmodul (1) und SIO im Schnittstellenmodul (2) arbeiten in analoger Weise wie im Master-Gerät zusammen bei der Weiterleitung der B-und D-Kanal-Daten zwischen ISDN-Schnittstelle und X-Kanal.

Vorteilhaft können Einrichtungen zur Protokollwandlung sowohl mit einem Schnittstellenmodul (2) als auch mit mehreren Schnittstellenmodulen (2) aufgebaut werden. Der Modeschalter (5) weist dann eine zusätzliche Schaltfunktion für den Betrieb zur Protokollwandlung über einen oder mehrere Schnittstellenmodule (2) und die Zuweisung entsprechender Sendetakte für einen gemeinsamen Betrieb aus.

Mit dem erfindungsgemäßen Verfahren und der erfindungsgemäßen Vorrichtung ist es möglich, die vielfältigen Dienste des ISDN über die Schnittstelle über weite Entfernungen in einer minimierten Bandbreite weiterzugeben, ohne in ein anderes Netz umsetzen zu müssen. Ein Verbleib im genutzten ISDN-Netz wird damit ermöglicht, wodurch die Qualität der Übertragungsdienste nicht beeinträchtigt wird.

Besteht der Übertragungskanal aus mehreren Einzelkanälen, können die Anschlüsse mindestens zu einem Übertragungskanal vorteilhaft als Schnittstelle für den Austausch digitaler, serieller Daten genutzt werden. Dazu ist der Anschluß eines Schnittstellenmoduls (2) als Schnittstelle für digitale, serielle Daten geschaltet und erlaubt den Austausch digitaler, serieller Daten über die weiteren Übertragungskanäle in den Zeiten, in denen die ISDN-Schnittstelle nicht aktiv ist.

Den Zustand der ISDN-Schnittstelle erkennt der Mikrorechner (6) durch Auswertung der D-Kanal-Information. Bei deaktivierter Schnittstelle übernimmt der Mikrorechner (6) Daten vom Schnittstellenmodul (2), das bei dieser Betriebsweise als Schnittstelle für digitale, serielle Daten geschaltet ist, und übergibt diese dem weiteren Schnittstellenmodul (2) zur Übertragung auf dem Übertragungskanal X. Erfolgt eine Aktivierung der ISDN-Schnittstelle, so wird der Schnittstellenmodul (2), der für den Austausch digitaler, serieller Daten geschaltet ist, durch den Mikrorechner (6) abgeschaltet. Die Einrichtungen zur Protokollwandlung arbeiten dann wie beschrieben.

Anhand beigefügter Zeichnungen werden Ausführungsbeispiele der Erfindung näher erläutert. Dabei zeigen
- Fig. 1: ein Blockschaltbild einer Einrichtung zur Protokollwandlung
- Fig. 2: Darstellung einer Vorrichtung zur Vergrößerung der Reichweite des Übertragungsweges zwischen Funktionseinheiten des ISDN-Teilnehmeranschlusses
- Fig. 3: Darstellung einer Vorrichtung zur Vergrößerung der Reichweite des Übertragungsweges zwischen Funktionseinheiten des ISDN-Teilnehmeranschlusses mit terminalseitig dem jeweiligen Übertragungskanal zugeordneten Protokollwandler
- Fig. 4: Darstellung einer Vorrichtung zur Vergrößerung der Reichweite des Übertragungsweges zwischen Funktionseinheiten des ISDN-Teilnehmeranschlusses mit Schnittstellen für den Austausch digitaler, serielle Daten

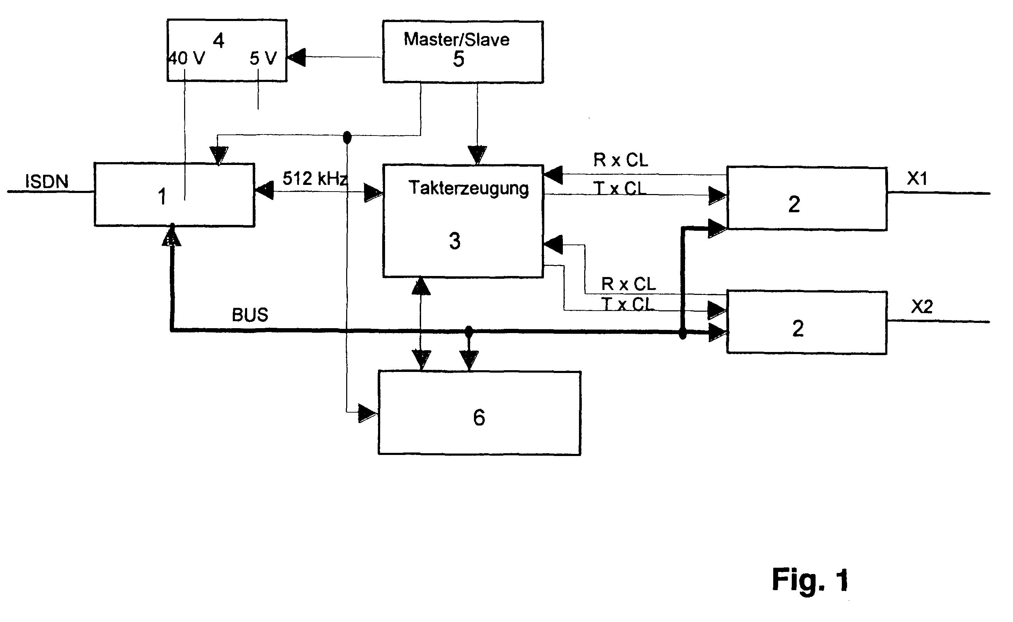

**Fig. 1** zeigt im Blockschaltbild eine Einrichtung zur Protokollwandlung.

Der Mikrorechner (6) besteht aus einem Mikroprozessor, ausgeführt als Am 188^{TM} EM, einem ROM zur Speicherung des Programmkodes, einem RAM als Arbeitsspeicher, und einem BUS.
Über den verlängerten BUS des Mikrorechners ist dieser mit einem als SAB 82532 ausgelegten SIO-Baustein in zwei Schnittstellenmodulen (2) und mit dem als PEB 2086 ausgelegten ISAC-Schaltkreis in den Schnittstellenmodulen (1) verbunden.
Der Prozessor im Mikrorechner (6) steuert die Funktion der Bauelemente PEB 2086 und SAB 82532 durch Einstellung der dafür vorgesehenen Register in diesen Bauelementen. Gleichfalls über Register dieser Bauelemente fragt der Prozessor den Zustand dieser Bauelemente ab und tauscht Daten aus.

Die Aktivierung/Deaktivierung der ISDN-Schnittstelle erfolgt durch den PEB 2086 im Schnittstellenmodul (1). Der Zustand der ISDN-Schnittstelle kann aus Registern des PEB 2086 abgelesen werden. Der Prozessor im Mikrorechner (6) fragt zyklisch die Register der PEB 2086 ab, die den Zustand der ISDN-Schnittstelle anzeigen.

Netzseitig arbeitet die Einrichtung nach Figur 1 im Master-Mode wie folgt:

Im Schnittstellenmodul (1) erfolgt im ISDN-Interface die wechselseitige Umwandlung der Signalpegel von der ISDN-Schnittstelle auf die vom Baustein PEB 2086 benötigten Signalpegel.

Mittels Modeschalter (5) wird der Baustein PEB 2086 im Schnittstellenmodul (1) in den TE-Mode (Terminal-Mode) geschaltet. In diesem Mode erzeugt der PEB 2086 einen Takt 512 kHz am Ausgang DCL. Wenn die ISDN-Schnittstelle aktiv ist, so wird der Takt 512 kHz synchron aus dem Bittakt der ISDN-Schnittstelle abgeleitet.
Der Takt 512 kHz des Schnittstellenmoduls wird an den Modul zur Takterzeugung (3) geleitet. Der Takt 512 kHz vom PEB 2086 der ISDN-Schnittstelle wird, gesteuert durch den Prozessor, im Modul zur Takterzeugung (3) benutzt, um durch Teilung den vorgegebenen Sendetakt von 64 kbit/s für die jeweilige SIO zu erzeugen.

Der PEB 2086 im Schnittstellenmodul (1) wandelt die ternär kodierten B- und D- Kanal-Signale von der ISDN-Schnittstelle in binär kodierte Signale um und speichert diese byteweise in seinen Registern ab. Umgekehrt wandelt der Baustein die vom Prozessor des Mikrorechners (6) eingegebenen binär kodierten B- und D-Kanal-Bytes in ternäre Signale um und sendet diese Daten an das Interface des Schnittstellenmoduls (1) zur Übertragung auf die ISDN-Schnittstelle.

Der PEB 2086 signalisiert durch ein Register, daß er zur Übernahme je eines neuen B1- und B2-Kanal-Bytes und gleichzeitig je ein vollständiges B1- und B2-Kanal-Byte zur Übernahme durch den Prozessor bereit steht. Der Prozessor des Mikrorechners (6) fragt das Signalisierungs-Register des PEB 2086 zyklisch ab und übernimmt die fertigen B-Kanal-Bytes in seinen Arbeitsspeicher beziehungsweise übergibt die B-Kanal-Bytes.

Der PEB 2086 signalisiert durch ein weiteres Register, wenn ein D-Kanal-Frame von der ISDN-Schnittstelle empfangen wurde. Der Prozessor fragt dieses Signalisierungsbyte ebenfalls zyklisch ab, übernimmt gegebenenfalls die D-Kanaldaten auf seinen Arbeitsspeicher und bildet D-Kanalblöcke.

Hat der Prozessor einen D-Kanalblock von der Gegenstelle empfangen, dann wird dieser aufgelöst und an den PEB 2086 zur Weiterleitung auf die ISDN-Schnittstelle gegeben.
Aus den vom PEB 2086 übernommenen Bytes bildet der Prozessor des Mikrorechners (6) 32 Bytes lange B1- und B2-Abschnitte und speichert diese im Arbeitsspeicher RAM zwischen.

Der Mikrorechner wählt entsprechend der logischen Adresse eine SIO aus und fragt zyklisch das Register dieser SIO ab. Die SIO zeigt in ihrem Register an, wann der nächste Datenteil übergeben werden soll, damit die Übertragung nicht abbricht. Der Prozessor im Mikrorechner (6) führt der adressierten SIO im Schnittstellenmodul (2) entsprechend weitere Datenteile zu.

Der Prozessor übergibt der SIO im jeweiligen Schnittstellenmodul (2) in fortlaufender Reihenfolge Datenteile der ISDN-Schnittstelle. Die ISDN-Schnittstelle arbeitet synchron auf der Basis des ISDN-Netztaktes, so daß auch die Datenteile entsprechend dem im Modeschalter (5) für den jeweiligen Schnittstellenmodul (2) eingestellten Sendetakt von 64 kHz synchron übertragen werden.

Bevor der Mikrorechner (6) B-Kanal-Abschnitte an die adressierte SIO übergibt, werden die zwischengespeicherten B-Kanaldaten analysiert. Aus komprimierungsfähigen Daten bildet er Komprimierungsblöcke von 8 Byte Länge, unterbricht die Übergabe von B-Kanalabschnitten an die adressierte SIO und übermittelt diese anstelle der B-Kanal-Abschnitte.

Die relative Adresse im B-Kanal-Abschnitt wird im Komprimierungsblock mitgeliefert. Gleichzeitig dient dieser Block der Byte-Synchronisation.

Aus den vorhandenen D-Kanaldaten bildet der Mikrorechner (6) D-Kanalblöcke in einer Länge von 8 Byte oder einem Vielfachen davon und übergibt sie bevorzugt der adressierten SIO anstelle der B-Kanal-Abschnitte, wobei die relative Adresse im B-Kanal-Abschnitt mit übertragen wird. Die Übertragung der D-Kanal-Blöcke dient zusätzlich zur Byte-Synchronisation.
In umgekehrter Richtung empfängt die adressierte SIO im Schnittstellenmodul (2) bitserielle Daten über das Interface im Schnittstellenmodul (2). Wenn in der SIO der erste Datenteil empfangen wird, werden entsprechende Signalisierungsbits in einem Register der SIO gesetzt. Der Prozessor des Mikrorechners (6) fragt dieses Register zyklisch ab und analysiert die empfangenen Daten. B-Kanaldaten werden getrennt nach B1 und B2-Kanaldaten im RAM des Mikrorechners (6) zwischengespeichert. Erkannte D-Kanalblöcke werden aufgelöst und dem D-Kanal-Register des ISAC-Schaltkreises im Schnittstellenmodul (1) übergeben. Erkannte B-Kanalkomprimierungsblöcke werden aufgelöst und im RAM des Mikrorechners (6) zwischengespeichert.

Die B-Kanal-Abschnitte werden in einer FIFO-Warteschlange geeigneter Tiefe sende- und empfangsseitig vorgehalten, um den erhöhten Bedarf an Übertragungsrate auszugleichen, der durch das Auftreten von D-Kanal-Blöcken verursacht wird. Durch die Komprimierung der B-Kanaldaten wird im Mittel die Datenrate konstant gehalten.

Terminalseitig arbeitet die Einrichtung nach Fig. 1 im Slave-Mode wie folgt:

Im Schnittstellenmodul (1) erfolgt im ISDN-Interface die wechselseitige Umwandlung der Signalpegel von der ISDN-Schnittstelle auf die vom Baustein PEB 2086 benötigten Signalpegel.

Durch die Mode-Einstellung (5) wird der Baustein PEB 2086 im Schnittstellenmodul (1) in den NT-Mode (Network Terminal-Mode) geschaltet. In diesem Mode benötigt der PEB 2086 synchrone Takte an den Eingängen DCL von 512 kHz, FSC1 und FSC2 von 8 kHz. Aus diesen leitet der PEB 2086 die Rahmensynchron - und Bitsynchrontakte für die ISDN-Schnittstelle ab.

Im Modul zur Takterzeugung (3) wird aus dem Bittakt eines ausgewählten Schnittstellenmoduls (2) der Takt zurückgewonnen, aus dem im Modul zur Takterzeugung (3) mittels nach bekannten Prinzipien arbeitender PLL ein Takt 512 kHz und daraus durch Teilung ein Takt von 8 kHz erzeugt wird. Diese Takte werden an die entsprechenden Eingänge des ISAC-Schaltkreises im Schnittstellenmodul (1) geliefert.

Mikrorechner (6), ISAC-Schaltkreis im Schnittstellenmodul (1) und SIO im Schnittstellenmodul (2) arbeiten in analoger Weise wie im Master-Gerät zusammen bei der Weiterleitung der B-und D-Kanal-Daten zwischen ISDN-Schnittstelle und X-Kanal.
Mit der Vorrichtung nach Fig. list es möglich, die vielfältigen Dienste des ISDN über die Schnittstelle über weite Entfernungen in einer Bandbreite von 64 kbit/s je B-Kanal weiterzugeben, ohne in ein anderes Netz umsetzen zu müssen. Ein Verbleib im genutzten ISDN-Netz wird damit ermöglicht und die Qualität der Übertragungsdienste nicht beeinträchtigt.

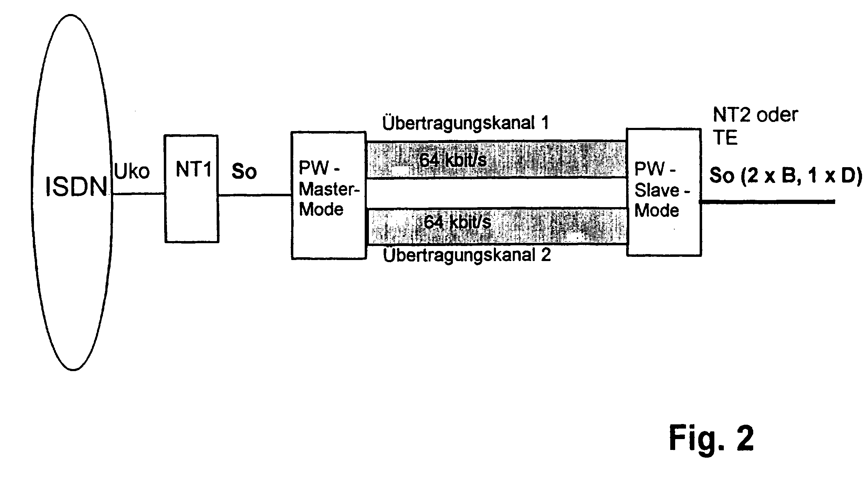

**Fig. 2** gibt eine Vorrichtung zur Vergrößerung der Reichweite des Übertragungsweges zwischen Funktionseinheiten des ISDN-Teilnehmeranschlusses bezogen auf eine Sₒ-Schnittstelle wieder. Ausgehend von einem Netz ISDN, über eine Schnittstelle Uₖₒ zu einem Netzabschluß NT1 ist netzseitig an der Schnittstelle Sₒ eine Einrichtung zur Protokollwandlung PW nachgeordnet, die über zwei Übertragungskanäle mit einer Einrichtung zur Protokollwandlung PW terminalseitig kommuniziert und die Schnittstelle Sₒ terminalseitig bereitstellt. Terminalseitig können dann beispielsweise ein Vermittlungsanlage (NT2) oder sofort Endgeräte (TE) betrieben werden.

Das Sₒ-netzseitig angeschlossene Gerät arbeitet im Master-Mode, das Sₒ-terminalseitig angeschlossene Gerät arbeitet im Slave-Mode. Das im Master-Mode arbeitende Gerät verhält sich zum ISDN-Netz hin wie ein Endgerät (TE), das im Slave-Mode arbeitende Gerät wie ein Netzwerkabschluß (NT).

Zwischen beiden über zwei parallel genutzte Übertragungskanäle verbundenen Einrichtungen zur Protokollwandlung (PW) erfolgt der Datenaustausch mittels bitserieller synchroner Übertragung von B-Kanal-Abschnitten für B1 und B2 in einer Länge von 32 Byte. Gleichartige Ausgangsdaten werden als Komprimierungsblock übertragen und D-Kanal-Daten werden als D-Kanal-Block übertragen. Diese Blöcke dienen gleichzeitig zur Byte-Synchronisation.

Die Einrichtung zur Protokollwandlung PW im Master-Mode aktiviert die Sₒ-Schnittstelle immer wieder neu, wenn diese nicht aktiv ist. Sie überträgt nur dann Daten, wenn die Sₒ-Schnittstelle aktiv ist.

Die Einrichtung zur Protokollwandlung PW im Slave-Mode aktiviert die Sₒ-Schnittstelle dann neu, wenn diese nicht aktiv ist und das Gerät zugleich auch Daten vom Master-Gerät empfängt. Sie deaktiviert die Sₒ-Schnittstelle, wenn sie keine Daten vom Master-Gerät empfängt.

Mit der Vorrichtung nach Fig. 2 ist es möglich, die vielfältigen Dienste des ISDN über die Schnittstelle über weite Entfernungen in einer Bandbreite von 64 kbit/s je B-Kanal weiterzugeben, ohne in ein anderes Netz umsetzen zu müssen. Ein Verbleib im genutzten ISDN-Netz wird damit ermöglicht und die Qualität der Übertragungsdienste nicht beeinträchtigt.

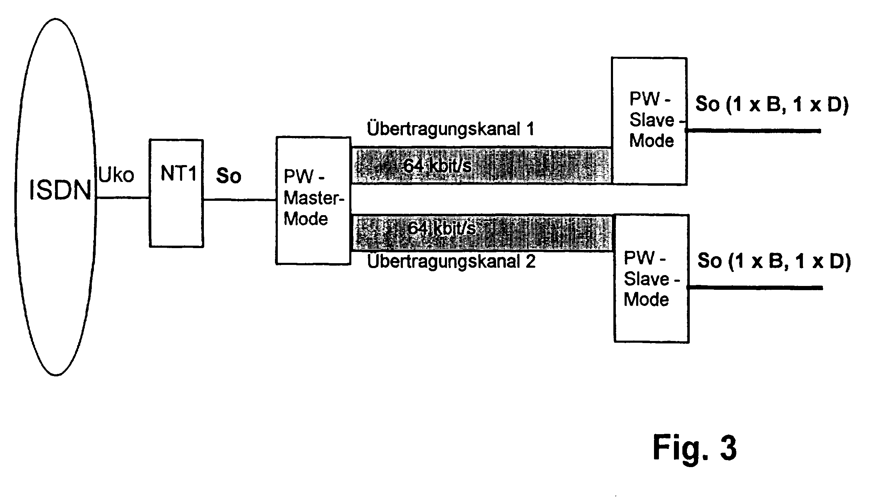

**Fig. 3** zeigt analog Fig. 2 eine Vorrichtung zur Vergrößerung der Reichweite des Übertragungsweges zwischen Funktionseinheiten des ISDN-Teilnehmeranschlusses bezogen auf eine ISDN-Schnittstelle. Im Gegensatz zu Fig. 2 ist terminalseitig jedem Übertragungskanal jeweils ein Protokollwandler zugeordnet. Damit ist es möglich, eine Kommunikation getrennt nach B1- und B2-Kanal über jeweils 64 kbit/s an getrennten Orten zu führen.

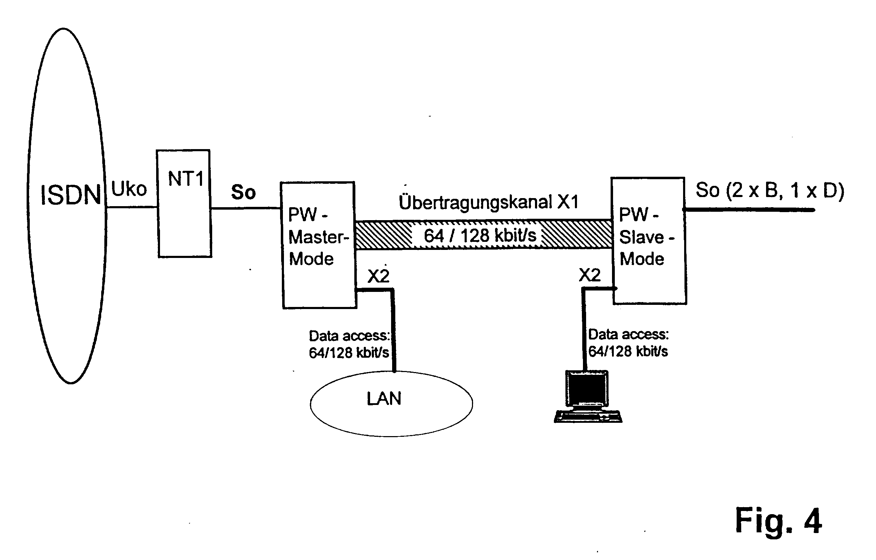

**Fig. 4** zeigt analog Fig. 2 eine Vorrichtung zur Vergrößerung der Reichweite des Übertragungsweges zwischen Funktionseinheiten des ISDN-Teilnehmeranschlusses bezogen auf eine ISDN-Schnittstelle S₀. Gegenüber Fig. 2 wird die Schnittstelle zum Übertragungskanal X2 als Anschluß an eine digitale, serielle Datenquelle, z. B. LAN oder ein PC genutzt. In den Zeiten, in denen die ISDN-Schnittstelle S₀ nicht aktiv ist, können dann über den Übertragungskanal X1 digitale, serielle Daten ausgetauscht werden.

Die Mikrorecher (6) der Protokollwandler (PW) erkennen durch Auswertung der D-Kanal-Information den Zustand der ISDN-Schnittstelle S₀. Bei deaktivierter Schnittstelle S₀ übernimmt der Mikrorechner (6) Daten vom Schnittstellenmodul (2), das bei dieser Betriebsweise als Schnittstelle für den Austausch digitaler, serieller Daten geschaltet ist, und übergibt diese dem weiteren Schnittstellenmodul (2) zur Übertragung auf dem Übertragungskanal X1. Wird die ISDN-Schnittstelle S₀ aktiviert, so schaltet der Mikrorechner (6) den Schnittstellenmodul (2) ab, der für den Austausch digitaler, serieller Daten geschaltet ist. Die Einrichtung zur Protollwandlung arbeitet dann wie unter Fig. 2 beschrieben.

Durch den Einsatz der in Fig. 4 beschriebenen Protokollwandler kann in existierenden Datenverbindungen die Schaltfunktion eines direkten Zugangs auf ein ISDN-Netzwerk integriert werden.

## Patentansprüche

1. Verfahren zum Vergrößern der Reichweite des Übertragungsweges zwischen Funktionseinheiten des ISDN-Teilnehmeranschlusses mit einer minimierten Bandbreite und bezogen auf eine ISDN-Schnittstelle unter Verwendung eines Übertragungsmittels
wobei
sendeseitig die an der ISDN-Schnittstelle auflaufenden ISDN-spezifisch kodierten Daten mittels eines Kodewandlers in binär kodierte Daten getrennt nach B- und D-Kanalinformationen umgewandelt werden,
die auflaufenden Daten aufbereitet, verarbeitet und anschließend in einem aus dem ISDN-Netztakt abgeleiteten Takt dem Übertragungsmittel zugeführt und über dieses der Empfängerseite übermittelt werden,
empfängerseitig mittels eines Taktrückgewinnungsmittels aus der zeitlichen Abfolge der übertragenen Datenbits, die zur Kommunikation von Sender und Empfänger notwendigen ISDN-spezifischen Takte zurückgewonnen werden,
die empfangenen Datenbits analysiert, bearbeitet und entsprechend dem zurückgewonnenen ISDN-Netztakt dem Kodewandler zugeführt und die binär kodierten Daten in ISDN-spezifisch kodierte Daten umgewandelt werden,
dadurch gekennzeichnet,
A) daß die auflaufenden Daten der B-Kanäle nach B1- und B2-Kanaldaten separiert, gleichlange Abschnitte für B1- und B2-Kanaldaten in einer Speichereinrichtung bereitgestellt, auf Datengleichheit untersucht, gleiche Daten komprimiert und anschließend in einem aus dem ISDN-Netztakt abgeleiteten Schrittakt im Wechsel von B1- und B2-Kanaldaten dem Übertragungsmittel zugeführt und über dieses der Empfängerseite übermittelt werden,
B) daß aus den auflaufenden Daten des D-Kanals Blöcke gebildet, die Übertragung von B-Kanaldaten unterbrochen wird und die D-Kanal-Blöcke anstelle der B-Kanaldaten bevorzugt dem Übertragungsmittel zur Übermittlung auf die Empfängerseite zugeführt werden,
C) daß die empfangenen Daten byteweise auf deren Merkmale analysiert, erkannte D-Kanalblöcke aufgelöst, dem Kodewandler direkt zugeführt werden, erkannte B-Kanalkomprimierungsdaten aufgelöst und mit erkannten B-Kanaldaten getrennt nach B1- und B2-Kanaldaten in einer Speichereinrichtung zwischengespeichert und entsprechend dem rückgewonnenen Takt dem Kodewandler zugeführt und die binär kodierten Daten in ISDN-spezifisch kodierte Daten umgewandelt werden.

2. Verfahren nach Anspruch 1, dadurch gekennzeichnet, daß die Komprimierung bzw. Dekomprimierung der B-Kanaldaten so erfolgt, daß bei Auftreten gleicher Zeichen ein B-Kanal-Komprimierungsblock mit einem Wiederholungszähler und einer Kennung für den jeweiligen Kanal gebildet wird und bei der Dekomprimierung erkannte Zeichenwiederholungen wieder aufgelöst werden.

3. Verfahren nach Anspruch 1 und 2, dadurch gekennzeichnet, daß B-Kanal-Abschnitte mit einer festen Länge gebildet werden, die Mindestlänge der D-Kanalblöcke und B-Kanal-Komprimierungsblöcke 1/4 der B-Kanal-Abschnitte beträgt und die D-Kanalblöcke ein Vielfaches der Mindestlänge aufweisen.

4. Verfahren nach Anspruch 1 bis 3, dadurch gekennzeichnet, daß bei Bildung von D-Kanalblöcken und B-Kanal-Komprimierungsblöcken die Übertragung der B-Kanal-Abschnitte an einer durch 4-teilbaren Stelle unterbrochen wird und diese anstelle der B-Kanalabschnitte dem Übertragungsmittel zur Übertragung auf die Empfängerseite übermittelt werden, wobei die D-Kanalblöcke bevorzugt werden.

5. Verfahren nach Anspruch 3, dadurch gekennzeichnet, daß als Hilfsmittel zur Synchronisation auf Bytegrenze ein B-Kanal-Komprimierungsblock auch dann gebildet wird, wenn der Datenstrom dadurch nicht reduziert wird.

6. Verfahren nach Anspruch 1, dadurch gekennzeichnet, daß in den Zeiten, in denen ein B1- und/oder B2-Kanal nicht zur Übertragung genutzt wird, keine Zuführung von B-Kanaldaten zum Übertragungsmittel erfolgt.

7. Verfahren nach Anspruch 1, dadurch gekennzeichnet, daß in den Zeiten, in denen die ISDN-Schnittstelle nicht aktiv ist, über das Übertragungsmittel digitale, serielle Daten ohne Kodewandlung ausgetauscht werden.

8. Verfahren nach Anspruch 1, dadurch gekennzeichnet, daß die Datenübertragung über ein oder mehrere Kanäle des Übertragungsmittels erfolgt.

9. Einrichtung zur Protokollwandlung für die Vergrößerung der Reichweite des Übertragungsweges zwischen Funktionseinheiten eines ISDN-Teilnehmeranschlusses bezogen auf eine ISDN-Schnittstelle,
bestehend aus einem ISDN-Schnittstellenmodul (1) mit einem ISAC-Schaltkreis mit Register; einem Mikrorechner (6) mit einem Mikroprozessor, mit einem ROM zur Speicherung des Programmkodes und einem RAM als Arbeitsspeicher; einem oder mehreren Schnittstellenmodulen (2) mit seriellen Input-Output-Bausteinen SIO für den Übertragungskanal X; einem Modul zur Taktgenerierung (3); einem Modeschalter (5); einer Stromversorgung (4) sowie entsprechenden elektrischen Verbindungen und einem Bus für den Adress- und Datenaustausch, wobei der ISDN- Schnittstellenmodul (1) geeignet ist, sowohl ISDN-spezifisch kodierte Daten in binär kodierte Daten als auch umgekehrt binär kodierte Daten in ISDN-spezifisch kodierte Daten umzuwandeln,
wobei der Schalter (5) für die Modeeinstellung auf die Stromversorgung (4), auf den ISDN-Schnittstellenmodul (1) und auf den Modul (3) zur Taktgenerierung einwirkt und eine zusätzliche Schaltfunktion für den Betrieb zur Protokollwandlung über einen oder mehrere Schnittstellenmodule (2) und die Zuweisung entsprechender Sendetakte aufweist,
wobei die Stromversorgung (4) die Schaltung mit Spannung versorgt und geeignet ist, wenn der Protokollwandler im Slavemode arbeitet, die Versorgungsspannung für netzunabhängige Endgeräte zu liefern,
und wobei der Modul zur Taktgenerierung (3) mit dem ISDN-Schnittstellenmodul (1), mit dem Schnittstellenmodul (2) für den Anschluß an den Übertragungskanal (X) sowie mit dem Mikrorechner (6) verbunden und geeignet ist, aus der zeitlichen Abfolge der übertragenen Datenbits die zur Kommunikation von Sender und Empfänger notwendigen ISDN-spezifischen Takte zurückzugewinnen,
wobei der Mikrorechner (6) über den BUS mit dem ISAC-Schaltkreis im ISDN-Schnittstellenmodul (1) sowie mit den seriellen Input-Output-Bausteinen SIO in den Schnittstellenmodulen (2) verbunden ist und der Prozessor im Mikrorechner (6) die Funktion der Bauelemente Taktmodul (3), ISAC-Schaltkreis im ISDN-Schnittstellenmodul (1) und der SIO-Bausteine in den Schnittstellenmodulen (2) durch Einstellung der dafür vorgesehenen Register in diesen Bauelementen steuert, über die Register dieser Bauelemente den Zustand dieser Bauelemente abfragt und Daten mit diesen Bauelementen austauscht,
dadurch gekennzeichnet, daß der Mikrorechner (6) geeignet ist,
A) die auflaufenden Daten der B-Kanäle nach B1- und B2-Kanaldaten zu separieren, gleichlange Abschnitte für B1- und B2-Kanaldaten im RAM zwischenzuspeichern, auf Datengleichheit zu untersuchen, gleiche Daten zu komprimieren und anschließend in einem aus dem ISDN-Netztakt abgeleiteten Schrittakt im Wechsel von Bl- und B2-Kanaldaten dem Schnittstellenmodul (2) zur Übermittlung über den Übertragungskanal X zuzuführen,
B) aus den auflaufenden Daten des D-Kanals Blöcke zu bilden, dabei die Übertragung von B-Kanaldaten zu unterbrechen und die D-Kanal-Blöcke anstelle der B-Kanaldaten bevorzugt der adressierten SIO im Schnittstellenmodul (2) zur Übermittlung auf die Empfängerseite zuzuführen, und geignet ist
C) die empfangenen Daten byteweise auf deren Merkmale zu analysieren, erkannte D-Kanalblöcke aufzulösen, dabei dem Register des ISAC-Schaltkreises im ISDN-Schnittstellenmodul (1) direkt zuzuführen, erkannte B-Kanalkomprimierungsdaten aufzulösen und mit erkannten B-Kanaldaten getrennt nach B1- und B2-Kanaldaten im RAM zwischenzuspeichern und entsprechend dem rückgewonnenen Takt an den ISAC-Schaltkreis im ISDN-Schnittstellenmodul (1) zuzuleiten.

10. Vorrichtung nach Anspruch 9, dadurch gekennzeichnet, daß der Übertragungskanal X aus einem Kanal oder mehreren Kanälen aufgebaut ist.

11. Einrichtung zur Protokollwandlung nach Anspruch 10, dadurch gekennzeichnet, daß der Übertragungskanal X aus mehreren Einzelkanälen besteht und die Einrichtung zur Protokollwandlung mehrere Schnittstellenmodule (2) aufweist, wobei der Anschluß mindestens eines Schnittstellenmodules (2) als Schnittstelle für den Austausch digitaler, serieller Daten geschaltet ist und den Austausch digitaler, serieller Daten in den Zeiten, in denen die ISDN Schnittstelle nicht aktiv ist, über den jeweiligen angeschlossenen Übertragungskanal erlaubt.

12. Vorrichtung zur Realisierung des Verfahrens nach Anspruch 1 sowie nach einem oder mehreren der Ansprüche 9 bis 11, dadurch gekennzeichnet, daß sie aus terminal- und netzseitig mit den ISDN-Schnittstellen verbundenen Einrichtungen zur Protokollwandlung und diesen zugeordneten Übertragungskanälen aus Übertragungseinrichtung und Übertragungsmedium besteht und die Einrichtungen zur Protokollwandlung über den zugeordneten Übertragungskanal miteinander kommunizieren, und daß die Einrichtungen zur Protokollwandlung sowohl im Master- als auch Slavemode oder im Master- oder im Slavemode aufgebaut sind, wobei die netzseitig angeschlossene Einrichtung zur Protokollwandlung im Mastermode und die terminalseitig angeschlossene Einrichtung zur Protokollwandlung im Slavemode geschalten ist.

## Claims

1. Method for the enlargement of the range of the transmission channel between functional groups of the ISDN-user interface with a minimized bandwidth and, with reference to an ISDN interface, by use of a transmission means
wherein
on the transmitter side, the ISDN-specifically coded data incoming at the ISDN interface are converted into binary-coded data by means of a code converter, separatedly for B- and D-channel information,
the incoming data are prepared, processed and subsequently fed to the transmission means in a timing derived from the ISDN network timing and transmitted through this transmission means to the receiver side,
on the receiver side, by means of a timing regaining device, the ISDN-specific timing signals that are necessary for the transmitter and receiver to communicate are regained from the time sequence of the data bits transmitted,
the received data bits are analyzed, processed and fed to the code converter according to the regained ISDN-net timing, and the binary-coded data are converted into ISDN-specifically coded data,
characterized in that
A) the incoming data of the B-channels are separated into B 1 - and B2-channel data, sections of equal lengths for B1- and B2-channel data are provided in a buffer device, checked for data equality, equal data compressed and subsequently, in a step timing derived from the ISDN network timing alternating between Bl- and B2-channel data, fed to the transmission means and transmitted through this transmission means to the receiver side,
B) from the incoming data of the D-channel blocks are formed, the transmission of B-channel data is interrupted and the D-channel blocks are preferably fed instead of the B-channel data to the transmission means for transmission to the receiver side,
C) the received data are analyzed in byte mode for their features, identified D-channel blocks are resolved, directly fed to the code converter, identified B-channel compression data are resolved and together with identified B-channel data are buffered in a buffer device separatedly for B1- and B2-channel data, and are fed to the code converter according to the regained timing, and the binary-coded data are converted into ISDN-specifically coded data.

2. Method to Claim 1 characterized in that the compression or decompression, respectively, of the B-channel data is executed in such a manner that when equal characters occur, a B-channel compression block with a repetition counter and a flag for the appropriate channel is formed and during decompression identified character repetitions are resolved.

3. Method to Claim 1 and 2 characterized in that B-channel sections of a fixed length are formed, the minimum lengths of D-channel blocks and B-channel compression blocks are equal to one quarter of the B-channel sections, and the D-channel blocks are a multiple of the minimum length.

4. Method to Claim 1 to 3 characterized in that when D-channel blocks and B-channel compression blocks are formed, the transmission of B-channel sections is interrupted at a place divisible by 4 and these blocks, instead of the B-channel sections, are transmitted to the transmission means for the transmission to the receiver side with the D-channel blocks being preferred.

5. Method to Claim 3 characterized in that, as an aid for the synchronization by byte boundary, a B-channel compression block is also formed when the data stream will not be reduced by this measure.

6. Method to Claim 1 characterized in that in those time periods in which a B1- and/or B2-channel is not used for transmission, no B-channel data are fed to the transmission means.

7. Method to Claim 1 characterized in that in those time periods in which the ISDN interface is not active, serial digital data are exchanged through the transmission means without code conversion.

8. Method to Claim 1 characterized in that the data transmission takes place through one or several channels of the transmission means.

9. Apparatus for the protocol conversion for the enlargement of the range of the transmission channel between functional groups of an ISDN-user interface with reference to an ISDN interface that consists of an ISDN-interface module (1) with an ISAC-circuit with register; a micro computer (6) with a microprocessor, with a ROM for the buffering of the programme code and a RAM as a working memory; one or several interface modules (2) with serial input/output modules SIO for the transmission channel X; a timing generation module (3); a mode switch (5); a power supply (4); and appropriate electrical connections and a bus for the address and data exchange with the ISDN-interface module (1) being suitable for the conversion of ISDN-specifically coded data into binary-coded data and, in the reverse direction, binary-coded data into ISDN-specifically coded data,
where the mode switch (5) acts on the power supply (4), the ISDN-interface module (1) and the timing generation module (3) and has an additional switching function for the operation for protocol conversion through one or several interface modules (2) and the allocation of the corresponding transmission timings,
in which the power supply (4) energizes the circuit and is suitable when the protocol converter operates in slave mode to deliver the supply voltage for mains-independent terminal equipment,
and in which the timing generation module (3) is connected to the ISDN-interface modules (1), to the interface module (2) for the connection to the transmission channel (X), and to the micro computer (6) and is suitable to regain the ISDN-specific timing signals necessary for the communication between transmitter and receiver from the time sequence of the data bits transmitted,
in which the micro computer (6) is connected via the bus to the ISAC-circuit in the ISDN-interface module (1) as well as to the serial input/output modules SIO in the interface modules (2), and the processor in the microcomputer (6) controls the function of the modules timing generation module (3), ISAC-circuit in the ISDN-interface module (1) and SIO-modules in the interface modules (2) by setting the appropriate registers in these modules, interrogates the state of these modules via the registers of these modules, and exchanges data with these modules,
characterized in that the microcomputer (6) is suitable
A) to separate the incoming data of the B-channels into B1- and B2-channel data, to buffer sections of equal lengths for Bl- and B2-channel data in the RAM, to check them for data equality, to compress equal data, and subsequently to feed them in a step timing derived from the ISDN network timing alternating between B1- and B2-channel data, to the interface module (2) for transmission over the transmission channel X,
B) to form blocks from the incoming data of the D-channel, and while doing so to interrupt the transmission of B-channel data and to preferably feed the D-channel blocks instead of the B-channel data to the addressed SIO in the interface module (2) for the transmission to the receiver side, and is suitable
C) to check the received data in byte mode for their features, to resolve identified D-channel blocks and to feed them directly to the register of the ISAC-circuit in the ISDN-interface module (1), to resolve identified B-channel compression data and to buffer them together with identified B-channel data in a buffer device separatedly for B1- and B2-channel data, and to feed them to the ISAC-circuit in the ISDN-interface module (1) according to the regained timing.

10. Apparatus to Claim 9 characterized in that the transmission channel X is composed of one channel or several channels.

11. Apparatus for the protocol conversion to Claim 10 characterized in that the transmission channel X is composed of several single channels and the apparatus for the protocol conversion has several interface modules (2) with the connection of at least one interface module (2) switched for the exchange of serial digital data and allowing the exchange of serial digital data in those time periods in which the ISDN-interface is not active over the appropriate transmission channel connected.

12. Apparatus for the realization of the method to Claim 1 and to one or several of the Claims 9 to 11 characterized in that it consists of devices for protocol conversion connected to the ISDN-interfaces on the terminal and net sides and of transmission channels including transmission device and transmission medium assigned to these devices, and the devices for protocol conversion communicate with each other over the assigned transmission channel, and the devices for protocol conversion are designed in both master and slave modes, or in master or slave mode with the net side device for protocol conversion switched in master mode and the terminal side device for protocol conversion switched in slave mode.

## Revendications

1. Procédé pour l'augmentation de la portée de la voie de transmission entre des unités fonctionnelles d'un poste d'abonné RNIS avec une bande passante minimisée et en rapport avec une interface RNIS, avec utilisation d'un moyen de transmission,
les données codées, spécifiques au RNIS et entrant à l'interface RNIS étant, du côté émetteur, converties en données codées binairement au moyen d'un convertisseur de code et séparées suivant des informations de canaux B et d'un canal D,
les données entrantes étant préparées, traitées et finalement amenées au moyen de transmission et transférées au côté récepteur par l'intermédiaire de ce moyen de transmission, à une cadence dérivée de la cadence d'horloge du réseau RNIS,
les cadences spécifiques au RNIS et nécessaires à la communication de l'émetteur et du récepteur étant récupérés du côté récepteur au moyen d'un dispositif de récupération de cadence à partir de la séquence temporelle des bits de données transférés,
les bits de données reçus étant analysés, traités et amenés au convertisseur de code en fonction de la cadence du réseau RNIS récupéré et les données codées binairement étant converties en données codées spécifiques au RNIS, **caractérisé en ce que**
A) les données entrant des canaux B sont séparées suivant des données du canal B1 et du canal B2, des sections de même longueur pour les données du canal B1 et du canal B2 sont préparées dans un dispositif de mémorisation, analysées pour vérifier la similitude des données, les données identiques étant compressées, et finalement amenées au moyen de transmission à une cadence ou un rythme pas à pas dérivé(e) de la cadence ou du rythme du réseau RNIS, avec alternance des données du canal B1 et du canal B2, et transmises au côté récepteur par l'intermédiaire de ce moyen de transmission.
B) des blocs sont formés à partir des données entrant du canal D, la transmission des données du canal B est interrompue et, au lieu des données du canal B, les blocs du canal D sont amenés de préférence au moyen de transmission pour le transfert vers le côté récepteur,
C) les caractéristiques des données reçues sont analysées octet par octet, les blocs du canal D identifiés sont séparés et amenés directement au convertisseur de code, les données compressées identifiées du canal B sont séparées et mémorisées temporairement dans un dispositif de mémorisation avec les données identifiées du canal B, en étant séparées suivant des données du canal B1 et du canal B2, et amenées au convertisseur de code en fonction du rythme ou de la cadence récupéré(e), et les données codées binairement sont converties en données codées spécifiques au RNIS.

2. Procédé suivant la revendication 1, **caractérisé en ce que** la compression et la décompression des données du canal B sont réalisées de telle manière qu'à l'apparition de signes identiques un bloc de compression du canal B est formé avec un compteur de répétition et un code ou un identifiant pour le canal respectif et qu'à la décompression les répétitions de signes identifiées sont à nouveau séparées.

3. Procédé suivant les revendications 1 et 2, **caractérisé en ce que** les sections du canal B sont formées avec une longueur fixe, la longueur minimale des blocs du canal D et des blocs de compression du canal B étant ¼ des sections du canal B, et les blocs du canal D présentant une longueur multiple de la longueur minimale.

4. Procédé suivant les revendications 1 à 3, **caractérisé en ce que**, à la formation des blocs du canal D et des blocs de compression du canal B, la transmission des sections du canal B est interrompue à un point ou endroit divisible par 4 et que ces sections, au lieu des sections du canal B, sont transférées au moyen de transmission pour le transfert au côté récepteur, les blocs du canal D étant préférés.

5. Procédé suivant la revendication 3, **caractérisé en ce qu**'un bloc de compression du canal B, servant d'aide pour la synchronisation sur la limite des octets, est aussi formé lorsque le flux de données n'en est pas réduit.

6. Procédé suivant la revendication 1, **caractérisé en ce que,** pendant les périodes où un canal B1 et/ou B2 n'est pas utilisé pour la transmission, il n'y a pas d'acheminement de données du canal B vers le moyen de transmission.

7. Procédé suivant la revendication 1, **caractérisé en ce que**, pendant les périodes où l'interface RNIS n'est pas active, des données sérielles et numériques sont échangées sans conversion de code par l'intermédiaire du moyen de transmission.

8. Procédé suivant la revendication 1, **caractérisé en ce que** la transmission des données est réalisée par l'intermédiaire d'un ou de plusieurs canaux du moyen de transmission.

9. Dispositif pour la conversion de protocoles pour l'augmentation de la portée de la voie de transmission entre des unités fonctionnelles d'un poste d'abonné RNIS en rapport avec une interface RNIS, constitué d'un module d'interface RNIS (1) avec un circuit intégré ISAC à registre ; d'un micro-ordinateur (6) avec un microprocesseur, avec une mémoire ROM pour la mémorisation du code du programme et une mémoire RAM comme mémoire de travail ; d'un ou de plusieurs modules d'interface (2) avec des modules d'entrée et de sortie sériels SIO pour le canal de transmission X ; d'un module générateur de rythme ou de cadence (3) ; d'un commutateur de mode (5) ; d'une alimentation en courant (4) ainsi que de connexions électriques correspondantes et d'un bus pour l'échange d'adresses et de données, le module d'interface RNIS (1) étant apte à convertir aussi bien des données codées spécifiques au RNIS en données codées binairement qu'inversement des données codées binairement en données codées spécifiques au RNIS,
le commutateur (5) de réglage du mode agissant sur l'alimentation en courant (4), sur le module d'interface RNIS (1) et sur le module (3) générateur de rythme ou de cadence et présentant une fonction de commutation supplémentaire pour l'exploitation pour la conversion de protocoles par l'intermédiaire d'un ou de plusieurs modules d'interface (2) et pour l'attribution de rythmes ou de cadences émetteurs correspondants,
l'alimentation en courant (4) alimentant le circuit en tension et étant apte, lorsque le convertisseur de protocoles fonctionne en mode esclave, à fournir la tension d'alimentation pour des terminaux ne dépendant pas du secteur,
et le module générateur de rythme (3) étant connecté au module d'interface RNIS (1), au module d'interface (2) pour la connexion au canal de transmission (X) ainsi qu'au micro-ordinateur (6), et étant apte à récupérer les rythmes ou cadences spécifiques au RNIS et nécessaires à la communication entre l'émetteur et le récepteur à partir de la séquence temporelle des bits de données transmis,
le micro-ordinateur (6) étant connecté au circuit intégré ISAC du module d'interface RNIS (1) ainsi qu'aux modules d'entrée et de sortie SIO des modules d'interface (2) par l'intermédiaire du bus, et le processeur dans le micro-ordinateur (6) commandant le fonctionnement des éléments tels que le module générateur de cadence ou de rythme (3), le circuit intégré ISAC du module d'interface RNIS (1) et les modules SIO dans les modules d'interface (2), par le réglage des registres prévus dans ces éléments, demandant l'état de ces élément par l'intermédiaire des registres de ces éléments et échangeant des données avec ces éléments, **caractérisé en ce que** le micro-ordinateur (7) est apte
A) à séparer les données entrant des canaux B suivant des données du canal B1 et du canal B2, à mémoriser temporairement des sections de même longueur pour les données des canaux B1 et B2 dans la mémoire RAM, à vérifier la similitude des données, à compresser des données identiques et finalement à les amener au module d'interface (2), à un rythme pas à pas dérivé du rythme du réseau RNIS et avec alternance des données du canal B1 et des données du canal B2, pour la transmission par l'intermédiaire du canal de transmission X,
B) à former des blocs à partir des données entrant du canal D, à interrompre la transmission des données du canal B et à amener les blocs du canal D, au lieu des données du canal B, de préférence au SIO adressé dans le module d'interface (2) pour la transmission au côté récepteur,
C) à analyser les caractéristiques des données reçues octet par octet, à séparer les blocs du canal D identifiés, à les amener directement au registre du circuit intégré ISAC du module d'interface RNIS (1), à séparer les données compressées du canal B et à les mémoriser temporairement dans la mémoire RAM avec les données du canal B identifiées, séparées en données du canal B1 et du canal B2, et à les amener au circuit intégré ISAC du module d'interface RNIS (1) en fonction du rythme récupéré.

10. Dispositif suivant la revendication 9, **caractérisé en ce que** le canal de transmission X est constitué d'un canal ou de plusieurs canaux.

11. Dispositif pour la conversion de protocoles suivant la revendication 10, **caractérisé en ce que** le canal de transmission X est constitué de plusieurs canaux individuels et en ce que le dispositif pour la conversion de protocoles présente plusieurs modules d'interfaces (2), la connexion d'au moins un module d'interface (2) étant commutée comme interface pour l'échange de données numériques sérielles et permettant l'échange de données numériques sérielles pendant les périodes pendant lesquelles l'interface RNIS n'est pas active, par l'intermédiaire du canal de transmission respectivement connecté.

12. Dispositif pour la réalisation du procédé suivant la revendication 1 ainsi que suivant une ou plusieurs des revendications 9 à 11, **caractérisé en ce qu**'il est constitué d'équipements connectés aux interfaces RNIS du côté terminal et du côté réseau pour la conversion de protocoles et de canaux de transmission attribués à ces équipements comprenant le dispositif de transmission et le milieu de transmission, et en ce que les équipements de conversion de protocoles communiquent entre eux par l'intermédiaire du canal de transmission attribué, et en ce que les équipements de conversion de protocoles sont configurés aussi bien en mode maître qu'en mode esclave ou en mode maître ou mode esclave, l'équipement connecté du côté réseau pour la conversion de protocoles étant commuté en mode maître et l'équipement connecté du côté terminal pour la conversion de protocoles étant commuté en mode esclave.
